# EUROPÄISCHE PATENTSCHRIFT

(11) **EP 1 330 714 B1**
(45) Veröffentlichungstag und Bekanntmachung des Hinweises auf die Patenterteilung: **14.07.2004**
(21) Anmeldenummer: 01992939.7
(22) Anmeldetag: 26.10.2001
(51) Int. Cl.: G06F 11/36

(54) **PROGRAMMIERWERKZEUG**
PROGRAMMING TOOL
OUTIL DE PROGRAMMATION

(30) Priorität: 02.11.2000 DE 10054196
(43) Veröffentlichungstag der Anmeldung: 30.07.2003
(73) Patentinhaber: Siemens Aktiengesellschaft, 80333 München (DE)
(72) Erfinder: OPATERNY, Thilo, 90453 Nürnberg (DE)
(86) Internationale Anmeldenummer: PCT/DE2001/004068
(87) Internationale Veröffentlichungsnummer: WO 2002/037281

(56) Entgegenhaltungen:
- DE-A- 19 728 476

## Beschreibung

Die Erfindung betrifft ein Programmierwerkzeug zur Erzeugung einer Programmunterbrechung.

Innerhalb von Automatisierungssystemen wird eine Programmlogik zur Steuerung und/oder Regelung der Sensorik und/oder Aktorik eines technischen Prozesses eingesetzt. Mit einer derartigen Programmlogik werden die von den Sensoren erfassten Parameterwerte sowie die über die Bedienelemente eingegebenen Werte eingelesen und mit intern ermittelten oder bestehenden Zuständen zu Ausgabewerten für die erwahnte Sensorik und/oder Aktorik weiter bearbeitet. Der Softwarebestandteil von modernen Automatisierungssystemen nimmt dabei standig zu.

Die Erstellung einer derartigen Programmlogik für ein Automatisierungssystem unterscheidet sich von herkömmlichen Programmen insbesondere dadurch, dass Automatisierungssysteme normalerweise ständig laufende sich selbststeuernde und/oder regelnde kybernetische Systeme darstellen. Diese Anwendung erfordert die ständige Wiederholung von immer wiederkehrenden Ablaufen, die von entsprechend immer wiederkehrenden Programmsequenzen der Programmlogik gesteuert und/oder geregelt werden. Die hierzu erforderliche Programmiertechnik wird daher als zyklische Programmierung bezeichnet. Ein wesentliches Ziel innerhalb der zyklischen Programmierung ist dabei eine möglichst kurze Laufzeit, da die Laufzeit der einzelnen Programmsequenzen im Wesentlichen der Reaktionszeit der Steuerung und/oder Regelung, die dem gesteuerten und/oder geregelten System zugrunde liegt, entspricht.

Die sich im Rahmen der Steuerung und/oder Regelung eines Automatisierungssystems ergebenden Aufgaben werden vor der Programmierung vom Programmierer in Einzelaufgaben zerlegt, so dass sie auf die jeweils verwendete Programmiersprache abgebildet werden können. Im Rahmen dieser Vorbereitung wird versucht, möglichst viele Aufgaben und Module zu erkennen, die standig wiederholt werden können. Die Erkennung sich ständig wiederholender Teilsequenzen ermöglicht eine besonders übersichtliche und kurze Programmierung.

Es werden verbreitet Anwenderprogramme eingesetzt, die herkommlicherweise aus Bausteinen bestehen. Diese Bausteine bestehen aus Netzwerken, die wiederum aus Operationen bestehen, die unterschiedliche Operanden miteinander verknüpfen. Zur Erstellung entsprechender Anwenderprogramme stehen graphische Programmiersprachen, wie etwa Kontaktplan (KOP) oder Funktionsplan (FUP), zur Verfügung. Innerhalb dieser Programme stellen die Bausteine Netzwerke aus logischen Verknüpfungen von Operatoren und Operanden dar. Im übertragenen Sinne entspricht ein derartiger Baustein also einer Prozedur oder Funktion in textuellen Programmiersprachen wie C oder Pascal. Jeder Baustein hat eine Schnittstelle und kann von anderen Bausteinen aufgerufen werden. Nach Ausführung eines Bausteins wird der in der Programmlogik nachfolgend aufgerufene Baustein ausgeführt.

Bei aller Sorgfalt lasst es sich nicht vermeiden, dass einzelne Operanden im Laufe der Ausführung des Programms überraschend einen anderen Wert aufweisen, als ursprunglich erwartet. Das Programm reagiert also an dieser Stelle nicht wie erwartet. Dies ist zumeist dann der Fall, wenn, insbesondere bei komplexen Prozessen, bisher nicht bedachte oder nicht erwartete Eingangswerte auf den vorangegangenen Baustein eingewirkt haben.

In Verbindung mit textuellen Programmiersprachen aber auch im Hardwarebereich sind so genannte Interrupts bekannt. Hierunter versteht man die Unterbrechung eines laufenden Prozesses durch die CPU bei Vorliegen einer entsprechenden Anforderung.

Je nachdem, ob die Anforderung ihre Ursache in der Hardware oder in der Software hat, unterscheidet man zwischen Hardware- und Software-Interrupts. Zur Abarbeitung der Hardware-Interrupts weisen die meisten Prozessoren einen eigenen Interrupt-Controller auf. Software-Interrupts werden durch spezielle Befehle des Maschinencodes oder durch den Prozessor selbst im Falle des Eintritts von definierten Fehlerbedienungen ausgelöst. Derartige Interrupts bieten die Möglichkeit, einen Prozess beim Eintritt von bestimmten Bedingungen anzuhalten, um zu uberprüfen, welche Bedingungen zu dem "HALT" geführt haben. In Verbindung mit textuellen Programmiersprachen konnen derartige Interrupts bewusst eingesetzt werden, um einen derartigen Interrupt herbeizufuhren, sobald ein Parameter einen nicht erwarteten Wert annimmt. Nach Unterbrechung des Prozesses kann dann analysiert werden, welche Bedingungen zu dem unerwarteten bzw. unerwünschten Zustand geführt haben. Da sich im Bereich der Automatisierungstechnik die erwähnten Bausteine auch gegenseitig aufrufen können, ist nach der vollständigen Abarbeitung eines Programms das Programmlisting meist derart unübersichtlich, dass die Suche nach der konkreten Fehlerursache erschwert ist.

Dokument DE-A-197 28 476 offenbart ein Programmiergerät mit Mitteln zur Formulierung einer zu lösenden Automatisierungsaufgabe in Form einer Programmiersprache für Automatisierungsgeräte, welches einer Auswerteeinheit eine Prozessfehleranalyse vereinfacht. Programmunterbrechungen werden in dieses Dokument jedoch nicht erwähnt.

Der Erfindung liegt daher die Aufgabe zugrunde, ein Verfahren und ein Programmierwerkzeug zur Erzeugung einer Programmunterbrechung zu schaffen, das in Verbindung mit einer Programmlogik zur Steuerung und/oder Regelung eines technischen Prozesses, also insbesondere in Verbindung mit einer graphischen Programmiersprache der Automatisierungstechnik einsetzbar ist.

Die Losung dieser Aufgabe gelingt mit einem Verfahren gemäß Anspruch 1 sowie mit einem Programmierwerkzeug mit den Merkmalen nach Anspruch 7.

Vorteilhafte Ausgestaltungen des erfindungsgemäßen Verfahrens sind gemäß den Merkmalen der abhängigen Ansprüche 2 bis 6 und hinsichtlich des Programmierwerkzeuges der abhängigen Ansprüche 8 und 9 gegeben.

Gemäß Hauptanspruch ist ein Verfahren zur Erzeugung einer entsprechenden Programmunterbrechung innerhalb einer Programmlogik mit Operatoren und Operanden zur Steuerung und/oder Regelung eines technischen Prozesses gegeben. Hierbei wird eine während der Übersetzung des Programms erstellte Aufstellung von Operandenbezeichnern in Verbindung mit den jeweiligen Verwendungsstellen der Operandenbezeichner in einer Bezeichnerliste zusammengestellt. Aus dieser relativ umfangreichen Bezeichnerliste wird eine Operandentabelle mit ausgewählten Operanden und der Bezeichnung des jeweiligen Zugriffs auf diese Operanden zusammengestellt. Im Weiteren können dann mittels dieser Tabelle bestimmte Zugriffe als Bedingung für den Eintritt einer Programmunterbrechung festgelegt werden.

Bei diesem Verfahren müssen zur Festlegung einer Programmunterbrechung also nicht mehr sämtliche Verwendungsstellen des "problematischen" Operanden durchgesehen werden, sondern es kann genau die Zugriffsart in komfortabler Weise ausgewahlt werden, die entweder einen zu überprufenden Fehler herbeigeführt hat oder aus sonstigen Gründen im Wege einer Programmunterbrechung überprüft werden soll.

Die Bezeichnerliste entsteht üblicherweise bei der Übersetzung der untersuchten Programmlogik. Allerdings steht sie bislang nicht zur Weiterbearbeitung zur Verfügung. In vorteilhafter Ausgestaltung der Erfindung werden sämtliche im Rahmen der einzelnen Ubersetzungsläufe entstehenden Teilbezeichnerlisten zu einer einzigen vollstandigen Bezeichnerliste zusammengefasst, die dann zur Weiterbearbeitung, hier zur Generierung einer Programmunterbrechung, verfügbar ist.

Dieser Bezeichnerliste ist ein Filterelement zugewiesen, um die üblicherweise sehr umfangreiche Bezeichnerliste übersichtlicher zu gestalten. So können beispielsweise nur die Operandenbezeichner ausgewählt werden, die an den Ein- und Ausgängen eines Bausteins übergeben werden. Das Filterelement kann somit zur Auswahl der in Verbindung mit der Definition einer Schnittstelle relevanten Operanden eingesetzt werden.

Schließlich kann innerhalb einer Operandentabelle mittels eines eigenen Markierungswerkzeugs eine Zeile oder eine oder mehrere Zellen dieser Zeile markiert werden. Mit dieser Auswahl wird die Breite eines Zugriffs auf den ausgewählten Operanden eindeutig bestimmt und als Bedingung für die Programmunterbrechung festgelegt.

In weiterer Ausgestaltung kann neben der Auswahl der Breite des Zugriffs auf einen Operanden auch die Art des Zugriffs als Kriterium zur Generierung eines Datenhaltepunkts festgelegt werden.

Erfolgte die Definition der Breite des Zugriffs durch Markierung von Zellen oder Zeilen der Operandentabelle, so erfolgt die Festlegung der Art des Zugriffs in komfortabler Weise in Form eines Auswahlmenüs, aus dem eine gewünschte Art des Zugriffs mittels eines weiteren Markierungswerkzeugs ausgewählt wird.

Das Programmierwerkzeug nach Anspruch 7 gestattet demnach die Definition der Bedingungen für eine Programmunterbrechung, also die Einrichtung eines Datenhaltepunkts ohne umständliche Analyse sämtlicher Verwendungsstellen des jeweils interessierenden Operanden in Verbindung mit einem hohen Bedienkomfort und einer stets übersichtlichen Darstellung.

Sobald mittels des vorstehend erlauterten Verfahrens die Bedingungen für den Eintritt der Programmunterbrechung eindeutig definiert sind, wird ein Datenhaltepunkt vom Programmierwerkzeug selbsttätig derart erzeugt, dass ein Befehl in die abzuarbeitende Programmsequenz des Inhalts eingearbeitet wird, dass beim Eintritt der zuvor definierten Bedingungen ein Programmunterbrechungsbefehl, also ein Interrupt, generiert wird und hierdurch der weitere Ablauf der Programmlogik zumindest vorübergehend unterbrochen wird.

Das Programmierwerkzeug weist ferner einen sich selbsttätig öffnenden Programmeditor für den Fall einer entsprechenden Programmunterbrechung auf, so dass die Analyse des Programms und insbesondere der zum Eintritt der Programmunterbrechung führenden Parameter ermöglicht wird. Innerhalb des Programmeditors kann dann die betreffende Programmsequenz bzw. der betreffende Baustein überarbeitet und erneut mittels des Programmierwerkzeugs moglicherweise auch mit veränderten Datenhaltepunkten versehen werden, um erneut eine Analyse der ein Automatisierungssystem steuernden Programmsequenz zu ermöglichen.

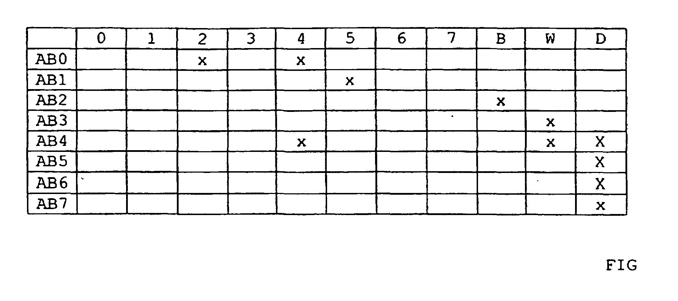

Das erfindungsgemäße Verfahren und Programmierwerkzeug wird nachstehend anhand einer in der Zeichnung dargestellten Operandentabelle veranschaulicht. Dabei stellt die Realisierung gemäß dem Ausfuhrungsbeispiel lediglich eine mögliche Umsetzung des Verfahrens bzw. Programmierwerkzeugs dar.

Die Erfindung wird nachfolgend anhand eines Ausführungsbeispiels unter Bezugnahme auf die einzige Figur der Zeichnung näher erläutert. Die Figur der Zeichnung zeigt eine Tabelle ausgewahlter, innerhalb einer Programmlogik verwendeter Operanden.

Die in der Zeichnung nur beispielhaft dargestellte Tabelle der innerhalb einer Programmlogik verwendeten Operanden betrifft beispielsweise die Operanden eines Ausgangs (A), mit einer Byteadressierung von (ABO bis AB7), wobei jeder Byteadressierung eine Zeile der Operandentabelle zugewiesen ist. Die einzelnen Zeilen sind in verschiedene Spalten unterteilt, die unterschiedliche Zugriffsbreiten auf die der jeweiligen Zeile zugeordnete Byteadresse bezeichnen. Es wird zwischen den bitweisen Zugriffen (0 bis 7), dem byteweisen Zugriff (B), dem wortweisen Zugriff (W) und dem Doppelwortzugriff (D) unterschieden.

Dabei sind die in der Tabelle zusammengefassten Operanden nur eine mittels eines Filters ausgewählte Untermenge aller innerhalb der Programmlogik verwendeten Operatoren. Im vorliegenden Beispiel interessieren die Operatoren des Ausgangs A.

Die Tabelle zeigt zusätzlich mehrere Markierungen, hier Kreuze. Anstelle von Kreuzen können einzelne Zellen oder Zeilen der Tabelle auch farbig hinterlegt sein oder sonstig hervorgehoben. Diese Markierungen zeigen, wie auf die verwendeten Operatoren zugegriffen wird. Im vorliegenden Fall zeigt die Tabelle die Breite des Zugriffs. Diese tabellarische Darstellung stellt eine graphische Umsetzung der Zugriffe auf ausgewählte Operanden dar.

Die in der Tabelle dargestellte Information wird aus einer zwischengespeicherten Bezeichnerliste gewonnen, die sämtliche Operandenbezeichner und deren Verwendungsstellen innerhalb der Programmlogik umfasst. Die Bezeichnerliste wird während der Übersetzung der Programmlogik angelegt und anschließend wie erwähnt zwischengespeichert. Mittels eines Filterelements, also beispielsweise der Auswahl des Ausgangs oder Eingangs eines Moduls, werden bestimmte Operanden ausgewählt und dann in Verbindung mit der Darstellung der Zugriffsbreite in der Operandentabelle, wie erläutert, angezeigt.

Mittels eines Markierungswerkzeuges, also beispielsweise einer Cursorpositionierung in der Operandentabelle, kann dann durch Auswahl einer oder mehrerer Zeilen oder Zellen ein bestimmter Zugriff als Bedingung für eine Programmunterbrechung ausgewählt werden. Dabei wird einem Benutzer in Verbindung mit der Markierung in Form eines Pop-Up- oder Pull-Down-Menüs oder beiden die Möglichkeit geboten, zusätzlich auch die Art des Zugriffs, also Schreiben, Lesen oder beides, festzulegen.

Damit sind ein oder mehrere Zugriffe auf einen bestimmten Operanden als Bedingung für eine Programmunterbrechung eindeutig festgelegt. Ein Programmierwerkzeug erzeugt im Weiteren selbsttätig den gewünschten Datenhaltepunkt an der solcherart definierten Zugriffsstelle.

## Patentansprüche

1. Verfahren zur Erzeugung einer Programmunterbrechung innerhalb einer Programmlogik mit Operatoren und Operanden zur Steuerung und/oder Regelung eines technischen Prozesses, bei dem folgende Schritte durchlaufen werden:
- Generierung einer vorzugsweise vollständigen Bezeichnerliste der innerhalb der Programmlogik verwendeten Operandenbezeichner und deren jeweiliger Verwendungsstellen innerhalb der Programmlogik während der Übersetzung der Programmlogik und
- Zwischenspeicherung dieser Bezeichnerliste zur Weiterbearbeitung derart,
- dass eine Auswahl dieser Operandenbezeichner wählbar ist und anhand dieser Auswahl
- eine Operandentabelle erzeugt wird, die die verwendeten Operanden in Verbindung mit der jeweiligen Art und/oder Breite des jeweiligen Zugriffs ausweist und derart zur Weiterbearbeitung angeboten wird,
- dass mittels der Operandentabelle ein Zugriff auf einen der verwendeten Operanden bezeichnet und
- dieser Zugriff innerhalb der Programmlogik als Bedingung für eine Programmunterbrechung angelegt wird.

2. Verfahren nach Anspruch 1, **dadurch gekennzeichnet, dass** bei jedem Übersetzungslauf der Programmlogik eine Teilbezeichnerliste angelegt und zwischengespeichert wird und anschließend samtliche Teilbezeichnerlisten zu der Bezeichnerliste zusammengefasst werden.

3. Verfahren nach Anspruch 1 oder 2, **dadurch gekennzeichnet, dass** aus der Bezeichnerliste mit einem einstellbaren Filterelement definierte Programmbezeichner, vorzugsweise der Ein- und Ausgänge eines Programms, einer Programmsequenz und/oder einzelnen Operanden, ausgewählt werden.

4. Verfahren nach einem der vorhergehenden Ansprüche, **dadurch gekennzeichnet, dass** innerhalb der Operandentabelle mittels eines Markierungswerkzeuges einzelne Zeilen und/oder Zellen markiert werden und hierdurch die Breite des Zugriffs bezeichnet wird.

5. Verfahren nach Anspruch 4, **dadurch gekennzeichnet, dass** zusätzlich zur Auswahl der Breite des jeweiligen Zugriffs auch die Art des Zugriffs, vorzugsweise Schreiben und/oder Lesen, ausgewählt wird.

6. Verfahren nach Anspruch 5, **dadurch gekennzeichnet, dass** die möglichen Arten des Zugriffs mittels eines Auswahlmenus, vorzugsweise in Form eines Pop-Up-Menüs und/oder Pull-Down-Menüs, zur Auswahl angeboten und mittels eines weiteren Markierungswerkzeuges ausgewählt und als weitere Bedingung für den Eintritt der Programmunterbrechung festgelegt werden.

7. Programmierwerkzeug zur Erzeugung einer Programmunterbrechung innerhalb einer Programmlogik mit Operatoren und Operanden zur Steuerung und/oder Regelung eines technischen Prozesses, bei dem eine während der Übersetzung der Programmlogik angelegte Bezeichnerliste der der innerhalb der Programmlogik verwendeten Operandenbezeichner zwischengespeichert und derart zur Weiterbearbeitung vorgesehen ist, dass zu einer vorgebbaren Auswahl von Operanden eine Operandentabelle erzeugt wird, die die verwendeten Operanden in Verbindung mit der jeweiligen Art und/oder Breite des jeweiligen Zugriffs ausweist und mittels dieser Operandentabelle ein Zugriff auf einen der verwendeten Operanden eindeutig festlegbar und dieser Zugriff innerhalb der Programmlogik als Bedingung für eine Programmunterbrechung selbsttätig angelegt ist.

8. Programmierwerkzeug nach Anspruch 7, **dadurch gekennzeichnet, dass** zum Zeitpunkt des mittels der Operandentabelle definierten Zugriffs ein Programmunterbrechungsbefehl generierbar und hierdurch der Ablauf der Programmlogik, mithin ein entsprechend angesteuertes laufendes Automatisierungssystem, unterbrechbar ist.

9. Programmierwerkzeug nach Anspruch 8, **dadurch gekennzeichnet, dass** zum Zeitpunkt der Programmunterbrechung ein Programmeditor selbsttätig aufrufbar und innerhalb dieses Programmeditors, vorzugsweise mittels einer Cursormarkierung, die Stelle des die Programmunterbrechung auslösenden Zugriffs mittels einer Markierung festlegbar ist.

## Claims

1. Method of generating a program interrupt within a program logic, with operators and operands for open-loop and/or closed-loop control of a technical process, in which the following steps are run through:
- generation of a preferably complete identifier list of the operand identifiers which are used within the program logic and their respective places of use within the program logic during translation of the program logic, and
- temporary storage of this identifier list for further processing, in such a way
- that a selection of these operand identifiers can be selected, and on the basis of this selection
- an operand table, which has the used operands in association with the type and/or width of the relevant access, is generated and offered for further processing, in such a way
- that using the operand table, an access to one of the used operands is identified, and
- this access is laid down within the program logic as the condition for a program interrupt.

2. Method according to Claim 1, **characterized in that** at each translation run of the program logic, a partial identifier list is created and temporarily stored, and then all partial identifier lists are combined into the identifier list.

3. Method according to Claim 1 or 2, **characterized in that** from the identifier list with an adjustable filter element, defined program identifiers, preferably the inputs and outputs of a program, a program sequence and/or individual operands, are selected.

4. Method according to one of the preceding claims, **characterized in that** within the operand table, using a marking tool, individual rows and/or cells are marked, and thus the width of the access is identified.

5. Method according to Claim 4, **characterized in that** in addition to selecting the width of the access, the type of access, preferably write and/or read, is selected.

6. Method according to Claim 5, **characterized in that** the possible types of access are offered for selection using a selection menu, preferably in the form of a pop-up menu and/or pull-down menu, and selected using another marking tool and defined as another condition for the occurrence of the program interrupt.

7. Programming tool to generate a program interrupt within a program logic with operators and/or operands for open-loop and/or closed-loop control of a technical process, in which an identifier list, which is created during the translation of the program logic, of the operand identifiers which are used within the program logic is temporarily stored and provided for further processing, in such a way that for a specifiable selection of operands an operand table, which has the used operands in association with the type and/or width of the relevant access, is generated, and using this operand table an access to one of the used operands can be uniquely defined, and this access is automatically created within the program logic as a condition for a program interrupt.

8. Programming tool according to Claim 7, **characterized in that** at the time of the access which is defined by means of the operand table a program interrupt instruction can be generated, and thus the flow of the program logic, and thus a correspondingly driven running automation system, can be interrupted.

9. Programming tool according to Claim 8, **characterized in that** at the time of the program interrupt a program editor can be called up independently, and within this program editor, preferably by means of a cursor marking, the position of the access which triggers the program interrupt can be defined by a marking.

## Revendications

1. Procédé de production d'une interruption de programme à l'intérieur d'une logique de programme avec opérateurs et opérandes pour la commande et/ou la régulation d'un processus technique, comprenant les étapes suivantes :
- génération d'une liste, complète de préférence, des noms d'opérandes utilisés à l'intérieur de la logique de programme et de leurs points d'utilisation respectifs à l'intérieur de la logique de programme pendant la traduction de la logique de programme, et
- mémorisation temporaire de cette liste de noms pour la suite du traitement,
de telle sorte que
- on peut faire une sélection de ces noms d'opérandes et, à l'aide de cette sélection,
- on peut produire un tableau d'opérandes qui comporte les opérandes utilisés en relation avec le type respectif et/ou la largeur respective de l'accès respectif et qui est proposé à la suite du traitement de telle sorte
- qu'un accès à un opérande utilisé est désigné au moyen du tableau d'opérandes, et
- que cet accès est placé à l'intérieur de la logique de programme comme condition pour une interruption de programme.

2. Procédé selon la revendication 1, **caractérisé par le fait que**, à chaque passe de traduction de la logique de programme, on crée une sous-liste de noms et on la mémorise temporairement puis on regroupe toutes les sous-listes de noms pour donner la liste de noms.

3. Procédé selon la revendication 1 ou 2, **caractérisé par le fait que**, à partir de la liste de noms, avec un élément de filtrage réglable, on sélectionne des noms de programme définis, de préférence les entrées et sorties d'un programme, d'une séquence de programme et/ou d'opérandes individuels.

4. Procédé selon l'une des revendications précédentes, **caractérisé par le fait que**, à l'intérieur du tableau d'opérandes, on marque différentes lignes et/ou cellules au moyen d'un outil de marquage et on désigne ainsi la largeur de l'accès.

5. Procédé selon la revendication 4, **caractérisé par le fait que**, en plus de la sélection de la largeur de l'accès respectif, on sélectionne aussi le type de l'accès, de préférence écriture et/ou lecture.

6. Procédé selon la revendication 5, **caractérisé par le fait que** les types possibles de l'accès sont proposés à la sélection au moyen d'un menu de sélection, de préférence sous la forme d'un menu ouvrant et/ou déroulant et sont sélectionnés au moyen d'un autre outil de marquage et sont spécifiés comme autre condition pour l'occurrence de l'interruption de programme.

7. Outil de programmation pour la production d'une interruption de programme à l'intérieur d'une logique de programme avec opérateurs et opérandes pour la commande et/ou la régulation d'un processus technique, dans lequel une liste, créée pendant la traduction de la logique de programme, des noms d'opérandes utilisés à l'intérieur de la logique de programme est mémorisée temporairement et est prévue de telle sorte pour la suite du traitement que, pour une sélection d'opérandes pouvant être prescrite, on utilise un tableau d'opérandes qui comporte les opérandes utilisés en relation avec le type respectif et/ou la largeur respective de l'accès respectif et, au moyen de ce tableau d'opérandes, on peut spécifier sans équivoque un accès à l'un des opérandes utilisés et cet accès est créé automatiquement à l'intérieur de la logique de programme comme condition pour une interruption de programme.

8. Outil de programmation selon la revendication 7, **caractérisé par le fait que**, à l'instant de l'accès défini au moyen du tableau d'opérandes, une instruction d'interruption de programme peut être générée et l'exécution de la logique de programme et par la suite un système automatisé s'exécutant suivant une commande correspondante peuvent être interrompus.

9. Outil de programmation selon la revendication 8, **caractérisé par le fait que**, à l'instant de l'interruption de programme, un éditeur de programme peut être appelé automatiquement et, à l'intérieur de cet éditeur de programme, l'emplacement du point d'accès déclenchant l'interruption de programme peut être spécifié au moyen d'un marquage, de préférence au moyen d'un marquage de curseur.
